# EUROPÄISCHE PATENTSCHRIFT

(11) **EP 0 577 073 B1**
(45) Veröffentlichungstag und Bekanntmachung des Hinweises auf die Patenterteilung: **12.06.1996**
(21) Anmeldenummer: 93110357.6
(22) Anmeldetag: 29.06.1993
(51) Int. Cl.: A44B 11/26, B60R 22/46

(54) **Verfahren zum Fixieren der Entriegelungstaste bzw. des Verriegelungsmechanismus eines Sicherheitsgurtschlosses bei Fahrzeugen und Sicherheitsgurtanordnung zur Ausführung dieses Verfahrens**
Process for locking the release button, respectively locking mechanism of a seat belt buckle in vehicles and seat belt system using this process
Procédé pour bloquer le bouton de déverrouillage, respectivement le mécanisme de verrouillage d'une boucle de ceinture de sécurité de véhicule et système de ceinture de sécurité mettant en oeuvre ce procédé

(30) Priorität: 30.06.1992 DE 4221398
(43) Veröffentlichungstag der Anmeldung: 05.01.1994
(73) Patentinhaber: TAKATA (EUROPE) VEHICLE, SAFETY TECHNOLOGY GmbH, D-89081 Ulm (DE)
(72) Erfinder: Kopetzky, Robert, D-7075 Mutlangen (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 368 277

## Beschreibung

Die Erfindung betrifft ein Verfahren zum Fixieren der vorzugsweise durch Federkraft auf ihre Schließstellung zu vorgespannten Entriegelungstaste bzw. eines Verriegelungsmechanismus eines Sicherheitsgurtschlosses bei Fahrzeugen mit einer Sicherheitsgurtanordnung mit wenigstens einem und vorzugsweise zwei am Chassis des Fahrzeuges befestigten langen Gurtstücken, an deren freiem Ende eine Riegelzunge befestigt ist, die mit einem Riegel in einem Schloßteil zusammenwirkt, welches am Fahrzeugchassis über einen Straffermechanismus befestigt ist, der eine Energiequelle aufweist, die mittels eines Beschleunigungssensors aktivierbar und bei Aktivierung das Schloßteil schlagartig um ein definiertes Wegstück in der Straffrichtung bewegt.

Die gebräuchlichste Ausführung von Sicherheitsgurtschlössern bei Sicherheitsgurtanordnungen in Kraftfahrzeugen umfaßt ein auch als Schloßgehäuse bezeichnetes Schloßteil, welches eine Verriegelungsmechanik enthält, die bei angelegtem Sicherheitsgurt die Riegelzunge mit dem Schloßteil so sicher verbindet, daß bei den im Falle eines Unfalles auftretenden erheblichen Gurtzugkräften das Sicherheitsgurtschloß einwandfrei verschlossen bleibt und sich nicht zur Unzeit öffnet. Die Riegelzunge kann jedoch vom Schloßteil durch Betätigung der Entriegelungstaste getrennt werden, wenn sich die durch den Sicherheitsgurt gesicherte Person beim Aussteigen aus dem Fahrzeug des Sicherheitsgurtes entledigen will. Die Entriegelung der Riegelzunge kann durch einen Druck auf die Entriegelungstaste vorgenommen werden.

Wenn die Sicherheitsgurtanordnung eine Schloßstraffeinrichtung bzw. einen Straffermechanismus für das Schloßteil aufweist, welcher die zunächst locker am Körper des Fahrzeuginsassen anliegenden Gurte bei im Falle eines Unfalles auftretenden Beschleunigungskräften schlagartig strafft, kann es vorkommen, daß größere Massenbeschleunigungskräfte die Verriegelungsmechanik in eine Entriegelungsposition bringen, bei der die Verbindung Schloßteil-Riegelzunge gelöst ist, obwohl dies bei einem Unfall nicht passieren darf. Die Straffereinrichtung funktioniert dabei im allgemeinen so, daß durch eine schlagartig zur Verfügung stehende Kraft das Schloß um ein solches definiertes Wegstück bewegt wird, daß der zunächst lose am Körper der im Fahrzeug sitzenden Person anliegende Sicherheitsgurt schlagartig gestrafft wird. Das Schloßteil schlägt am Ende der Strafferbewegung gegen einen Anschlag eines am Fahrzeugchassis befestigten Gegenstückes an; insbesondere dabei kann es zu den die Auslösung zur Unzeit hervorrufenden erheblichen Beschleunigungskräften kommen.

Aus der EP 0 368 277 A1 ist bereits ein Sicherheitsgurtschloß für eine Sicherheitsgurtanordnung mit einem Verriegelungsmechanismus bekannt, der die mit dem Sicherheitsgurt verbundene Riegelzunge aufnimmt und festhält. Das Schloß ist mit Mitteln zur Freigabe des Verriegelungsmechanismus versehen, um die Herausnahme der Riegelzunge aus dem Schloß zu ermöglichen. Das Schloß weist Mittel auf, die auf eine Beschleunigung in wenigstens einer Richtung relativ zum Schloß ansprechen und den Verriegelungsmechanismus gegen eine Bewegung in die Freigabestellung sichern. Die Mittel zur Sperrung des Verriegelungsmechanismus gegen Auslösung bestehen aus einem im Schloß vorgesehenen, beweglichen Gewicht. Bei der bekannten Sicherheitsgurtanordnung ist kein Gurtstraffermechanismus vorgesehen.

Das Ziel der Erfindung besteht darin, ein Verfahren und eine vorrichtung der eingangs genannten Gattung zu schaffen, bei denen eine durch Beschleunigungskräfte beliebiger Richtung und Größe bedingte Verschiebung der Entriegelungstaste bzw. von ihr beaufschlagten Entriegelungselemente in die Entriegelungsposition sicher vermieden wird.

Zur Lösung dieser Aufgabe sieht die Erfindung vor, daß bei Aktivierung der Energiequelle ein vorzugsweise geringer Bruchteil der Energie der Energiequelle nicht zur Beschleunigung des Sicherheitsgurtschlosses, sondern unmittelbar zum Fixieren der Entriegelungstaste bzw. eines von ihr beaufschlagten Entriegelungselementes verwendet wird. Insbesondere soll die Ausführung dabei so sein, daß der Bruchteil bei Beginn der Aktivierung der Energiequelle abgezweigt und zur Fixierung der Entriegelungstaste bzw. eines von ihr beaufschlagten Entriegelungselementes verwendet wird.

Der Erfindungsgedanke ist also darin zu sehen, daß nicht die bei einem Unfall auftretenden Beschleunigungskräfte, sondern die durch diese ausgelöste Kraft bzw. der Druck der Energiequelle für eine Fixierung der Entriegelungstaste bzw. eines von ihr beaufschlagten Entriegelungselementes verwendet wird. Da für die Fixierung der Entriegelungstaste bzw. eines von ihr beaufschlagten Entriegelungselementes im allgemeinen wesentlich geringere Massen zu beschleunigen sind als für die Betätigung des Straffermechanismus selbst ist dafür gesorgt, daß insbesondere beim Auftreten der durch das Ankommen des Straffermechanismus in seiner Endposition auftretenden Beschleunigungskräfte die Lösung der Verriegelung zwischen Schloßteil und Riegelzunge wirksam vermieden wird.

Nach zwei praktischen Ausführungsbeispielen kann vorgesehen sein, daß insbesondere durch pyrotechnische Mittel erzeugtes, komprimiertes Gas als Energiequelle verwendet wird und der bei Zündung auftretende Druck zur Fixierung der Entriegelungstaste bzw. eines von ihr beaufschlagten Entriegelungselementes verwendet wird oder daß eine Federspeicheranordnung als Energiequelle verwendet wird und die bei Aktivierung erzeugte Kraft zur Fixierung der Entriegelungstaste bzw. eines von ihr beaufschlagten Entriegelungselementes verwendet wird.

Gegenstand der Erfindung ist auch eine Sicherheitsgurtanordnung bei Fahrzeugen mit wenigstens einem und vorzugsweise zwei am Fahrzeugchassis des Fahrzeuges befestigten langen Gurtstücken, an deren freiem Ende eine Riegelzunge befestigt ist, die mit einem Riegel in einem Schloßteil zusammenwirkt, welches am Fahrzeugchassis über einen Straffermechanismus befestigt ist, wobei das Schloßteil eine vorzugsweise durch Federkraft auf ihre verriegelungs-Stellung zu vorgespannte Entriegelungstaste aufweist und der Straffermechanismus eine Energiequelle besitzt, die mittels eines Beschleunigungssensors aktivierbar ist und bei Aktivierung das Schloßteil schlagartig um ein definiertes Wegstück in der Straffrichtung bewegt.

Bei einer derartigen Sicherheitsgurtanordnung sieht die Erfindung vor, daß im Schloßteil ein Fixiermechanismus für die Entriegelungstaste bzw. ein von ihr beaufschlagtes Entriegelungselement vorgesehen ist, welcher normalerweise eine vorzugsweise durch Federkraft herbeigeführte Nichtfixierungsposition einnimmt und derart mit der Energiequelle verbunden ist, daß er durch die aktivierte Energiequelle in eine Fixierposition gelangt, in welcher er eine Betätigung der Entriegelungstaste bzw. des von ihr beaufschlagten Entriegelungselementes verhindert.

Eine vorteilhafte praktische Ausführungsform kennzeichnet sich dadurch, daß der Fixiermechanismus aus einem beweglichen, vorzugsweise schwenkbaren Fixierglied besteht, das durch eine vorzugsweise von einer Feder bereitgestellte Rückstellkraft auf die Nichtfixierposition zu vorgespannt ist und durch die von der Energiequelle bereitgestellte Energie gegen die Rückstellkraft in die Fixierposition bewegbar ist, in der es sich im Wege eines Anschlages befindet, der sich vorzugsweise an der Entriegelungstaste bzw. des von ihr beaufschlagten Entriegelungselementes befindet und in der Weise mit ihr in Wirkverbindung steht, daß bei in der Fixierposition befindlichem Fixierglied die Entriegelungstaste zumindest nicht in ihre Entriegelungsstellung verschiebbar ist.

Ein erstes praktisches Ausführungsbeispiel der Erfindung kennzeichnet sich dadurch, daß in einem Zylinderraum ein mit einer Kolbenstange versehener Kolben sowie in Verbindung mit dem Zylinderraum als Energiequelle eine pyrotechnische Ladung vorgesehen ist und daß von dem Zylinderraum auf der Druckseite des Kolbens eine flexible Druckschlauchleitung abzweigt und zu einem Druckraum im Schloßteil führt, bei dessen Druckbeaufschlagung das Fixierglied sich in seine Fixierposition bewegt.

Ein weiteres praktisches Ausführungsbeispiel ist dadurch gekennzeichnet, daß die Energiequelle ein Federspeicher ist, der den Straffermechanismus und gleichzeitig einen pneumatischen Kolben beaufschlagt, mittels dessen in einem Zylinder ein Druck für die Betätigung des Fixiergliedes aufgebaut und über eine flexible Druckschlauchleitung zu einem Druckraum im Schloßteil geleitet werden kann, bei dessen Druckbeaufschlagung das Fixierglied sich in seine Fixierposition bewegt.

Die Erfindung wird im folgenden beispielsweise anhand der Zeichnung beschrieben; in dieser zeigt:
- Fig. 1: eine schematische teilweise geschnittene Seitenansicht einer Sicherheitsgurtanordnung gemäß der Erfindung in einem Kraftfahrzeug mit geschlossenem Sicherheitsgurtschloß,
- Fig. 2: einen Ausschnitt aus Fig. 1 bei geöffnetem Sicherheitsgurtschloß,
- Fig. 3: eine zu Fig. 1 ähnliche Ansicht, wobei die Auswirkungen am Beginn der Aktivierung der Energiequelle gezeigt sind,
- Fig. 4: einen Ausschnitt aus Fig. 3 in der am meisten verkürzten Position des Straffermechanismus,
- Fig. 5: eine zu Fig. 1 analoge Darstellung einer weiteren Ausführungsform in kleinerem Maßstab, wobei die Sicherheitsgurte und die Riegelzunge nicht dargestellt sind, und
- Fig. 6: eine zu Fig. 1 analoge Darstellung einer weiteren Ausführungsform des Schloßteils des Sicherheitsgurtschlosses.

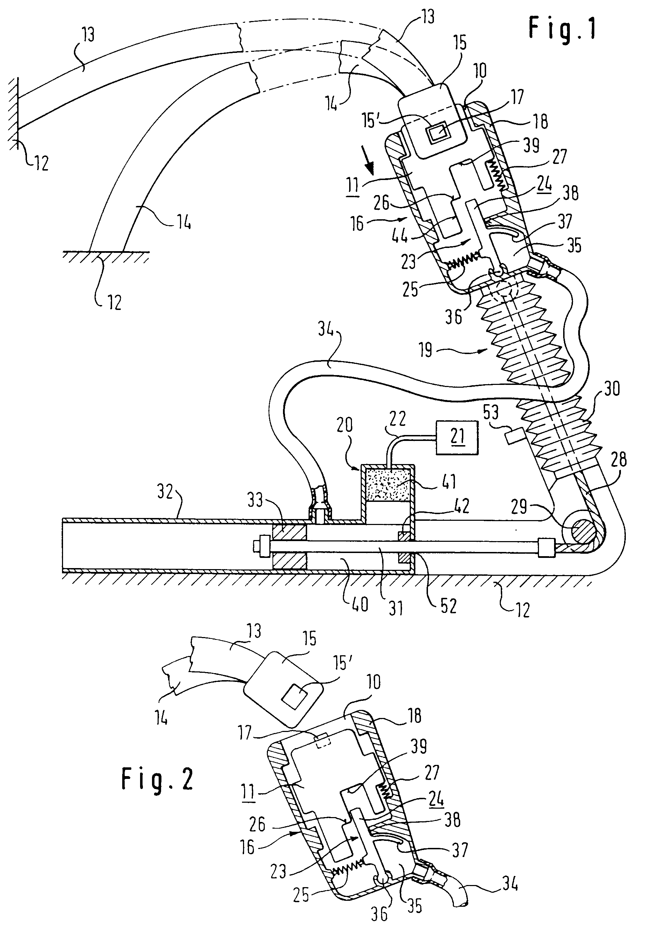

Nach Fig. 1 sind am Chassis 12 eines nicht im einzelnen dargestellten Kraftfahrzeuges das eine Ende eines Schultergurtstücks 13 und eines Bauchgurtstücks 14 einer Sicherheitsgurtanordnung befestigt. Die Befestigung kann auch über einen nicht dargestellten, auf eine bestimmte Lose der Gurte einstellbare Gurtaufroller erfolgen.

Die beiden Gurtstücke 13, 14 führen zu einer an ihrem freien Ende vorgesehenen Riegelzunge 15, in der eine Riegelöffnung 15' vorgesehen ist und die bei angelegtem Sicherheitsgurt nach Fig. 1 in einen am vorderen Ende eines mit der Riegelzunge 15 ein Sicherheitsgurtschloß 16 bildenden Schloßteils 18 vorgesehenen Schlitz 10 eingreift, wobei ein zum Schloßteil 18 gehörender und nur schematisch angedeuteter Riegel 17 in die Riegelöffnung 15' eindringt. Dadurch wird das Sicherheitsgurtschloß 16 so geschlossen, daß es durch bei einem Unfall auf die Gurtstücke 13, 14 ausgeübte Zugkräfte nicht zu öffnen ist.

Das Schloßteil 18 ist über einen Straffermechanismus 19 ebenfalls am Fahrzeugchassis 12 befestigt.

Am Schloßteil 18 befindet sich eine Entriegelungstaste 11, die beispielsweise durch eine Rückstellfeder 27 auf die in Fig.1 dargestellte Verriegelungsposition zu vorgespannt ist. Durch Verschieben der Entriegelungstaste 11 in Richtung des Pfeiles in Fig. 1 gelangt die Entriegelungstaste 11 in die in Fig. 2 wiedergegebene Position, wo der Riegel 17 durch nicht dargestellte Kraftübertragungsmittel aus der Riegelöffnung 15' herausbewegt worden ist, so daß die Riegelzunge 15 aus dem Schloßteil 18 in der aus Fig. 2 ersichtlichen Weise herausgenommen werden kann. Das Einsetzen der Riegelzunge 15 in das Schloßteil 18 erfolgt in umgekehrter Richtung, wobei der Riegel 17 von selbst in die Riegelöffnung 15' einschnappt.

Der Straffermechanismus 19 besteht aus einem am Schloßteil 18 unten befestigten Seil 28, welches über eine Umlenkrolle 29 zu einer Energiequelle 20 geführt ist, die ebenso wie die Umlenkrolle 29 am Fahrzeugchassis 12 befestigt ist. Das Seil 28 ist nach außen durch eine sich zwischen dem Schloßteil 18 und dem Befestigungsteil der Umlenkrolle 29 erstreckende Federmanschette 30 nach außen abgedeckt.

Am unteren Ende des in die Horizontale umgelenkten Seiles 28 ist eine Kolbenstange 31 befestigt, die durch eine abgedichtete Gleitbohrung 52 in einen Zylinder 32 hineinragt und an ihrem Ende einen Kolben 33 trägt. Der Zylinderraum zwischen dem Kolben 33 und der Bohrung 52 ist durch einen flexiblen Schlauch 34 mit einem Druckraum 35 im Innern des Schloßteils 18 verbunden, der an seinem in Fig. 1 linken Ende durch ein Fixierglied 24 dicht abgeschlossen ist, welches am hinteren Ende des Schloßteils 18 bei 36 angelenkt ist. Eine Abdichtlasche 37 sorgt dafür, daß das Fixierglied 24 beim Verschwenken in Fig. 1 nach links den Raum 35 weiter druckdicht abdichtet.

Das Fixierglied 24 ist durch eine Feder 25 gegen einen Anschlag 38 vorgespannt, welcher die Nichtfixierposition des Fixiergliedes 24 definiert. In dieser Position kann die Entriegelungstaste 11 von Hand aus der Position nach Fig. 1 in die Stellung nach Fig. 2 bewegt werden, wodurch eine Entriegelung stattfindet. Zur Ermöglichung dieser Bewegung ist in der Entriegelungstaste eine Aussparung 39 vorgesehen. An ihrem hinteren Ende schließt sich in Fig. 1 nach links an die Aussparung 39 eine Stufe an, durch die ein Anschlag 26 für das Fixierglied 24 definiert wird.

An dem zwischen dem Kolben 33 und der Bohrung 52 befindlichen Teil des Zylinderraums 40 grenzt ein mit einer explosiven Ladung 41 gefüllter Raum an, der über eine Steuerleitung 22 mit einem Beschleunigungssensor 21 verbunden ist.

Unmittelbar im Anschluß an die Bohrung 52 befindet sich an der Kolbenstange ein Ringanschlag 42, der ein weiteres Ausziehen des Seiles 28, als es in Fig. 1 dargestellt ist, unmöglich macht.

Die Wirkungsweise der dargestellten und beschriebenen Sicherheitsgurtanordnung ist wie folgt:
Im Normalzustand befindet sich der Seilzug 28 und der Straffermechanismus 19 in der aus Fig. 1 ersichtlichen ausgezogenen Position. In dieser kann die Riegelzunge 15 in das Schloßteil 18 eingeschoben werden, wobei der Riegel 17 in die Riegelöffnung 15' einschnappt. In dieser Position liegen die Gurtstücke 13, 14 nur lose und den Insassen nicht behindernd an dessen Körper an.

Durch Betätigen der Entriegelungstaste 11 in Richtung des Pfeiles in Fig. 1 gelangt diese in die Position nach Fig.2, wobei der Riegel 17 durch nicht dargestellte Kraftübertragungsmittel aus der Riegelöffnung 15' der Riegelzunge 15 entfernt wird, so daß diese in der in Fig. 2 angedeuteten Weise vom Schloßteil 18 getrennt werden kann.

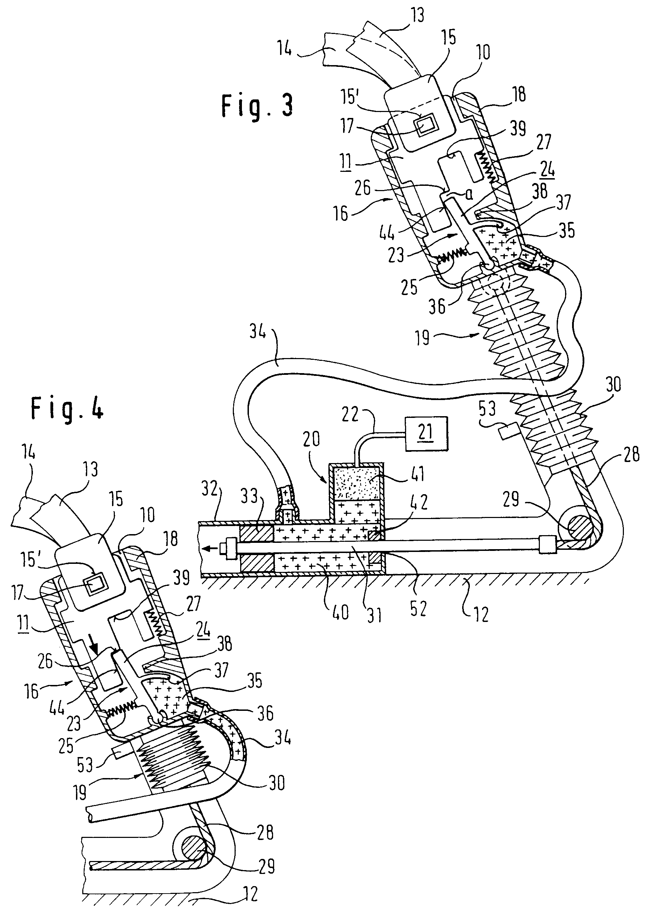

Tritt nun beim Fahren mit geschlossenem Sicherheitsgurtschloß 16 nach Fig. 1 durch einen Unfall eine gefährliche Beschleunigung auf, so meldet dies der Beschleunigungssensor 21 und zündet die pyrotechnische Ladung 41, was einen Druckaufbau im Zylinderraum 40 sowie der Druckleitung 34 und dem Druckraum 35 zur Folge hat. Der Druckaufbau ist durch kleine Kreuze in Fig. 3 und 4 angedeutet.

Da der Druck praktisch momentan im Druckraum 35 zur Verfügung steht, wird zunächst das Fixierglied 24 in Fig.1 nach links verschwenkt, wobei es an einer seitlichen Anschlagfläche 44 der Entriegelungstaste 11 zur Anlage kommt. In dieser Position befindet sich das Fixierglied 24 im Wege des Anschlages 26 der Entriegelungstaste 11.

Wird nun der Kolben 33 in Richtung des Pfeiles in Fig. 3 nach links schlagartig verschoben, so zieht das Seil 28 das Sicherheitsgurtschloß 16 schlagartig nach unten unter Zusammendrückung der Federmanschette 30. In der in Fig. 4 dargestellten Endposition der Bewegung des Sicherheitsgurtschlosses 16 schlägt das Schloßteil 18 an irgendein mit dem Chassis 12 verbundenes Teil 53 an, so daß die Entriegelungstaste 11 eine erhebliche Beschleunigung in Richtung des Pfeiles in Fig.4 erfährt, die so groß sein kann, daß die Entriegelungstaste 11 sich in Entriegelungsrichtung bewegt. Hier ist nun aber durch einen entsprechend geringen Abstand a (Fig. 3) zwischen der oberen Stirnseite des Fixiergliedes 24 und dem Anschlag 26 dafür gesorgt, daß sich die Entriegelungstaste 11, bevor sie sich um ein die Entriegelung ermöglichendes Stück bewegt hat, mittels des Anschlages 26 am fest am Schloßteil 18 befestigten Fixierglied 24 abstützt, wie das in Fig. 4 angedeutet ist. Dadurch ist eine weitere Bewegung der Entriegelungstaste 11 in Entriegelungsrichtung unmöglich gemacht.

Der durch das Fixierglied 24, den Anschlag 26, die Feder 25 und den Druckraum 35 gebildete Fixiermechanismus 23 kann auch statt auf die Entriegelungstaste 11 auf irgendein anderes, von der Entriegelungstaste 11 beaufschlagtes Entriegelungsmittel einwirken und ist auf jeden Fall so anzuordnen, daß er bei Betätigung durch die Energiequelle 20 eine Entriegelung des Verriegelungsmechanismus zwischen dem Schloßteil 18 und der Riegelzunge 15 ausschließt.

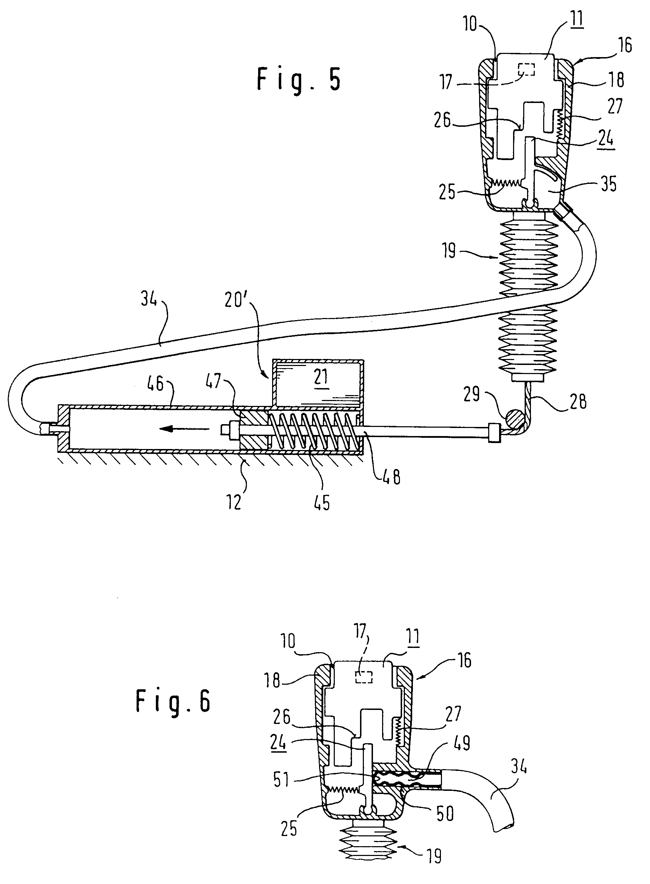

Fig. 5 zeigt als Energiequelle einen Federspeicher 20', bei dem statt der Explosionsladung 41 nach den Fig. 1 bis 4 eine Schraubendruckfeder 45 einen in einem Zylinder 46 angeordneten pneumatischen Kolben 47 beaufschlagt. An der vom Kolben 47 abgewandten Stirnseite des Zylinders 46 ist ein pneumatischer Schlauch 34 angeordnet, der wieder in den Druckraum 35 des Schloßteils 18 führt.

Sobald der Beschleunigungssensor 21 den gespannten Federspeicher auslöst, kann sich die Feder 45 entspannen und verschiebt den Kolben 47 schlagartig nach links in Fig. 5. Dadurch baut sich in der Leitung 34 ein Druck auf, der schon am Beginn das Fixierglied 24 in die Verriegelungsstellung bewegt. Gleichzeitig zieht eine mit dem Kolben 47 verbundene Kolbenstange 48 den mit ihr verbundenen Seilzug 28 an und bewegt dadurch das Schloßteil 18 in eine Position analog der in Fig.4 dargestellten.

Nach Fig. 6 muß der Druckschlauch 34 nicht in einem hinter dem Fixierglied 24 befindlichen Druckraum 35 münden, sondern kann auch einen dehnbaren Schlauch 49 beaufschlagen, der in einem zu ihm passenden Kanal 50 des Schloßteils 18 untergebracht ist und mit seiner vorn geschlossenen Stirnfläche 51 das Riegelglied 24 in Verrieglungs-Bewegungsrichtung beaufschlagt. Entsteht in der Leitung 34 ein Druck, dehnt sich der zieharmonikaartig etwas zusammengeschobene und elastische Schlauch 50 aus und verschwenkt dabei das Fixierglied 24 in seine Verriegelungsposition, wie sie aus Fig. 3 entnehmbar ist.

## Patentansprüche

1. Verfahren zum Fixieren der vorzugsweise durch Federkraft auf ihre Schließstellung zu vorgespannten Entriegelungstaste (11) bzw. eines von ihr beaufschlagten Entriegelungsmechanismus eines Sicherheitsgurtschlosses (16) bei Fahrzeugen mit einer Sicherheitsgurtanordnung mit wenigstens einem und vorzugsweise zwei am Chassis (12) des Fahrzeuges befestigten langen Gurtstücken (13, 14), an deren freiem Ende eine Riegelzunge (15) befestigt ist, die mit einem von der Entriegelungstaste (11) beaufschlagbaren Riegel (17) in einem Schloßteil (18) zusammenwirkt, welches am Fahrzeugchassis (12) über einen Straffermechanismus (19) befestigt ist, der eine Energiequelle (20, 20') aufweist, die mittels eines Beschleunigungssensors (21) aktivierbar ist und bei Aktivierung das Schloßteil (18) schlagartig um ein definiertes Wegstück in der Straffrichtung bewegt,
dadurch gekennzeichnet,
daß bei Aktivierung der Energiequelle (20, 20') ein vorzugsweise geringer Bruchteil der Energie der Energiequelle (20, 20') nicht zur Beschleunigung des Sicherheitsgurtschlosses (16), sondern unmittelbar zum Fixieren der Entriegelungstaste (11) bzw. eines von ihr beaufschlagten Entriegelungselementes verwendet wird.

2. Verfahren nach Anspruch 1, dadurch gekennzeichnet, daß der Bruchteil bei Beginn der Aktivierung der Energiequelle (20, 20') abgezweigt und zur Fixierung der Entriegelungstaste (11) bzw. eines von ihr beaufschlagten Entriegelungselementes verwendet wird.

3. Verfahren nach Anspruch 1 oder 2, dadurch gekennzeichnet, daß insbesondere durch pyrotechnische Mittel erzeugtes, komprimiertes Gas als Energiequelle (20) verwendet wird und der bei Zündung auftretende Druck zur unmittelbaren Fixierung der Entriegelungstaste (11) bzw. eines von ihr beaufschlagten Entriegelungselementes verwendet wird.

4. Verfahren nach Anspruch 1 oder 2, dadurch gekennzeichnet, daß eine Federspeicheranordnung (20') als Energiequelle verwendet wird und die bei Aktivierung erzeugte Kraft zur Fixierung der Entriegelungstaste (11) bzw. eines von ihr beaufschlagten Entriegelungselementes verwendet wird.

5. Sicherheitsgurtanordnung bei Fahrzeugen mit wenigstens einem und vorzugsweise zwei am Fahrzeugchassis (12) des Fahrzeuges befestigten langen Gurtstücken (13, 14), an deren freiem Ende eine Riegelzunge (15) befestigt ist, die mit einem Riegel (17) in einem Schloßteil (18) zusammenwirkt, welches am Fahrzeugchassis (12) über einen Straffermechanismus (19) befestigt ist, wobei das Schloßteil (18) eine vorzugsweise durch Federkraft auf ihre verriegelungs-Stellung zu vorgespannte Entriegelungstaste (11) aufweist und der Straffermechanismus (19) eine Energiequelle (20) besitzt, die mittels eines Beschleunigungssensors (21) aktivierbar ist und bei Aktivierung das Schloßteil (18) schlagartig um ein definiertes Wegstück in der Straffrichtung bewegt, insbesondere zur Ausführung des Verfahrens nach einem der vorhergehenden Ansprüche,
dadurch gekennzeichnet,
daß im Schloßteil (18) ein Fixiermechanismus (23) für die Entriegelungstaste (11) bzw. ein von ihr beaufschlagtes Entriegelungselement vorgesehen ist, welcher normalerweise eine vorzugsweise durch Federkraft (25) herbeigeführte Nichtfixierungsposition einnimmt und derart mit der Energiequelle (20, 20') verbunden ist, daß er durch die aktivierte Energiequelle (20, 20') in eine Fixierposition gelangt, in welcher er eine Betätigung der Entriegelungstaste (11) bzw. des von ihr beaufschlagten Entriegelungselementes verhindert.

6. Sicherheitsgurtanordnung nach Anspruch 5, dadurch gekennzeichnet, daß der Fixiermechanismus (23) aus einem beweglichen, vorzugsweise schwenkbaren Fixierglied (24) besteht, das durch eine vorzugsweise von einer Feder (25) bereitgestellte Rückstellkraft auf die Nichtfixierposition zu vorgespannt ist und durch die von der Energiequelle (20, 20') bereitgestellte Energie gegen die Rückstellkraft in die Fixierposition bewegbar ist, in der es sich im Wege eines Anschlages (26) befindet, der sich vorzugsweise an der Entriegelungstaste (11) bzw. des von ihr beaufschlagten Entriegelungselementes befindet und in der Weise mit ihr in Wirkverbindung steht, daß bei in der Fixierposition befindlichem Fixierglied (24) die Entriegelungstaste (11) zumindest nicht in ihre Entriegelungsstellung verschiebbar ist.

7. Sicherheitsgurtanordnung nach Anspruch 5 oder 6, dadurch gekennzeichnet, daß in einem Zylinderraum (40) ein mit einer Kolbenstange (31) versehener Kolben (33) sowie in Verbindung mit dem Zylinderraum (40) als Energiequelle eine pyrotechnische Ladung (41) vorgesehen ist und daß von dem Zylinderraum (40) auf der Druckseite des Kolbens (33) eine flexible Druckschlauchleitung (34) abzweigt und zu einem Druckraum (35, 49) im Schloßteil (18) führt, bei dessen Druckbeaufschlagung das Fixierglied (24) sich in seine Fixierposition bewegt.

8. Sicherheitsgurtanordnung nach Anspruch 5 oder 6, dadurch gekennzeichnet, daß die Energiequelle ein Federspeicher (20') ist, der den Straffermechanismus (19) und gleichzeitig einen pneumatischen Kolben (47) beaufschlagt, mittels dessen in einem Zylinder (46) ein Druck für die Betätigung des Fixiergliedes (24) aufgebaut und über eine flexible Druckschlauchleitung (34) zu einem Druckraum (35, 49) im Schloßteil (18) geleitet werden kann, bei dessen Druckbeaufschlagung das Fixierglied (24) sich in seine Fixierposition bewegt.

## Claims

1. Method of fixing the delatching button (11) which is preferably biased by spring force towards its closed position, or of fixing a delatching mechanism of a safety belt lock (16) in motor vehicles on which the delatching button acts, comprising a safety belt arrangement with at least one, and preferably two long belt pieces (13, 14) secured to the chassis (12) of the motor vehicle, with a latching tongue (15) being secured to the free end thereof and cooperating with a latch (17) acted on by the delatching button (11) in a lock part (18) which is secured to the vehicle chassis (12) via a tensioner mechanism (19) having an energy source (20, 20') which can be activated by means of an acceleration sensor (21) and which, on activation, abruptly moves the lock part (18) by a defined amount in the tensioning direction, characterised in that, on activation of the energy source (20, 20'), a preferably small fraction of the energy of the energy source (20, 20') is not used for the acceleration of the safety belt lock (16), but is rather directly used for the fixation of the delatching button (11) or of a delatching element acted on by it.

2. Method in accordance with claim 1, characterised in that the fraction is branched off at the start of the activation of the energy source (20, 20') and is used for the fixation of the delatching button (11) or of a delatching element acted on by it.

3. Method in accordance with claim 1 or claim 2, characterised in that compressed gas generated in particular by pyrotechnical means is used as the energy source, and the pressure which arises on triggering is used for the direct fixation of the delatching button (11) or of a delatching element acted on by it.

4. Method in accordance with claim 1 or claim 2, characterised in that a spring storage device (20') is used as the energy source and the force generated on activation is used for the fixation of the delatching button (11) or of a delatching element acted on by it.

5. Safety belt arrangement in motor vehicles with at least one, and preferably two, long belt pieces (13, 14) secured to the vehicle chassis (12) of the vehicle and having a latching tongue (15) secured to the free end thereof which cooperates with a latch (17) in a lock part (18) which is secured to the vehicle chassis (12) via a tensioner mechanism (19), wherein the lock part (18) has a delatching button (11) which is preferably biased by spring force towards its latched position and the tensioner mechanism (19) has an energy source (20) which can be activated by means of an acceleration sensor (21) and which, on activation, abruptly moves the lock part (18) by a defined amount in the tensioning direction, in particular for carrying out the method in accordance with one of the preceding claims, characterised in that a fixing mechanism (23) for the delatching button (11) or for a delatching element on which it acts is provided in the lock part (18) and normally adopts a non-fixing position which is preferably brought about by spring force (25), and wherein the fixing mechanism is connected to the energy source (20, 20') in such a way that it enters, through the activated energy source (20, 20'), into a fixing position in which it prevents an actuation of the delatching button (11) or of the delatching element acted on by it.

6. Safety belt arrangement in accordance with claim 5, characterised in that the fixing mechanism (23) comprises a movable and preferably pivotable fixing member (24) which is biased towards the non-fixing position by a resetting force which is preferably made available by a spring (25) and which can be moved by the energy made available by the energy source (20, 20') against the resetting force into the fixing position in which it is located in the path of an abutment (26) which is preferably located on the delatching button (11), or in the path of a delatching element acted on by it, and is in functional engagement with it in such a manner that, when the fixing member (24) is located in the fixing position, the delatching button (11) is at least not displaceable into its delatching position.

7. Safety belt arrangement in accordance with claim 5 or claim 6, characterised in that a piston (33) provided with a piston rod (31) is provided in a cylinder space (40) and also a pyrotechnical charge (41) is provided as the energy source in connection with the cylinder space (40); and in that a flexible pressure hose (34) branches off from the cylinder space (40) at the pressure side of the piston (33) and leads to a pressure space (35, 49) in the lock part (18), wherein, when the pressure space is subjected to pressure, the fixing member (24) moves into its fixing position.

8. Safety belt arrangement in accordance with claim 5 or claim 6, characterised in that the energy source is a spring store (20') which acts on the tensioner mechanism (19) and simultaneously acts on a pneumatic piston (47) by means of which a pressure for the actuation of the fixing member (24) is built up in a cylinder (46) and can be directed via a flexible hose (34) to a pressure space (35, 49) in the lock part (18), wherein, on pressurising of the pressure space, the fixing member (24) moves into its fixing position.

## Revendications

1. Procédé pour fixer un bouton de déverrouillage (11), ou un mécanisme de déverrouillage sollicité par celui-ci, mis sous précontrainte en sa direction de fermeture de préférence par la force d'un ressort, d'une serrure de ceinture de sécurité (16) dans des véhicules présentant un agencement de ceinture de sécurité comportant au moins une et de préférence deux longues parties de ceinture (13, 14) fixées sur le châssis (12) du véhicule, à l'extrémité libre desquelles est fixée une languette de verrouillage (15) qui coopère avec un pêne (17) susceptible d'être sollicité par le bouton de déverrouillage (11) dans une partie de serrure (18) qui est fixée sur le châssis (12) du véhicule via un mécanisme tendeur (19) qui présente une source d'énergie (20, 20') laquelle peut être activée au moyen d'un détecteur d'accélération (21) et lors de l'activation déplace brusquement la partie de serrure (18) sur un trajet défini en direction de tension, caractérisé en ce que lors de l'activation de la source d'énergie (20, 20'), une fraction de préférence faible de l'énergie de la source d'énergie (20, 20') n'est pas utilisée pour l'accélération de la serrure de ceinture de sécurité (16), mais directement pour fixer le bouton de déverrouillage (11) ou de l'un des éléments de déverrouillage sollicités par celui-ci.

2. Procédé selon la revendication 1, caractérisé en ce que la fraction est déviée au début de l'activation de la source d'énergie (20, 20'), et est utilisée pour la fixation du bouton de déverrouillage (11) ou de l'un des éléments de déverrouillage sollicités par celui-ci.

3. Procédé selon l'une ou l'autre des revendications 1 et 2, caractérisé en ce que l'on utilise en tant que source d'énergie (20) du gaz comprimé produit en particulier par des moyens pyrotechniques, et en ce que la pression qui s'établit lors de l'allumage est utilisée pour fixer directement le bouton de déverrouillage (11) ou l'un des éléments de déverrouillage sollicités par celui-ci.

4. Procédé selon l'une ou l'autre des revendications 1 et 2, caractérisé en ce que l'on utilise en tant que source d'énergie un agencement accumulateur à ressort (20'), et en ce que l'on utilise la force produite lors de l'activation pour fixer le bouton de déverrouillage ou l'un des éléments de déverrouillage sollicités par celui-ci.

5. Agencement de ceinture de sécurité dans des véhicules comportant au moins une et de préférence deux longues parties de ceinture (13, 14) fixées sur le châssis (12) du véhicule, à l'extrémité libre desquelles est fixée une languette de verrouillage (15) qui coopère avec un pêne (17) dans une partie de serrure (18) qui est fixée sur le châssis (12) du véhicule via un mécanisme tendeur (19), la partie de serrure (18) présentant un bouton de déverrouillage (11) mis sous précontrainte vers sa position de verrouillage de préférence par la force d'un ressort, et le mécanisme tendeur (19) présentant une source d'énergie (20) qui peut être activée au moyen d'un détecteur d'accélération (21) et qui déplace lors de l'activation brusquement la partie de serrure (18) d'un trajet défini en direction de tension, en particulier pour la mise en oeuvre du procédé selon l'une quelconque des revendications précédentes, caractérisé en ce qu'il est prévu dans la partie de serrure (18) un mécanisme de fixation (23) pour le bouton de déverrouillage (11) ou pour un élément de déverrouillage sollicité par celui-ci, qui occupe normalement une position de non-fixation entraînée de préférence par la force d'un ressort (25) et qui est relié de telle sorte à la source d'énergie (20, 20') qu'il parvient, grâce à la source d'énergie (20, 20') activée, dans une position de fixation dans laquelle il empêche un actionnement du bouton de déverrouillage (11) ou de l'élément de déverrouillage sollicité par celui-ci.

6. Agencement de ceinture de sécurité selon la revendication 5, caractérisé en ce que le mécanisme de fixation (23) est constitué par un organe de fixation mobile (24), de préférence en basculement, qui est mis sous précontrainte vers la position de non-fixation par une force de rappel établie de préférence par un ressort (25), et qui peut être déplacé à l'encontre de la force de rappel dans la position de fixation par l'énergie fournie par la source d'énergie (20, 20'), position dans laquelle l'organe de fixation (24) se trouve dans le parcours d'une butée (26) qui est située de préférence sur le bouton de déverrouillage (11) ou sur l'élément de déverrouillage sollicité par celui-ci, et qui se trouve en liaison active avec ce bouton de telle sorte que lorsque l'organe de fixation (24) se trouve dans la position de fixation, le bouton de déverrouillage (11) ne peut du moins pas être déplacé dans sa position de déverrouillage.

7. Agencement de ceinture de sécurité selon l'une ou l'autre des revendications 5 et 6, caractérisé en ce qu'il est prévu dans une chambre cylindrique (40) un piston (33) pourvu d'une tige de piston (31) et une charge pyrotechnique (41) prévue en tant que source d'énergie en liaison avec la chambre cylindrique (40), et en ce qu'une conduite de pression flexible (34) est en dérivation depuis la chambre cylindrique (40) sur le côté pression du piston (33) et mène à une chambre de pression (35, 49) dans la partie de serrure (18), et lors de la mise en pression de cette chambre l'organe de fixation (24) se déplace dans sa position de fixation.

8. Agencement de ceinture de sécurité selon l'une ou l'autre des revendications 5 et 6, caractérisé en ce que la source d'énergie est un accumulateur à ressort (20') qui sollicite le mécanisme tendeur (19) et simultanément un piston pneumatique (47) au moyen duquel est établie une pression dans un cylindre (46) pour l'actionnement de l'organe de fixation (24) et cette pression peut être amenée via une conduite de pression flexible (34) à une chambre de pression (35, 49) dans la partie de serrure (18), et lors de la mise en pression de cette chambre l'organe de fixation (24) se déplace dans sa position de fixation.
